# EUROPÄISCHE PATENTSCHRIFT

(11) **EP 2 475 959 B1**
(45) Veröffentlichungstag und Bekanntmachung des Hinweises auf die Patenterteilung: **08.07.2015**
(21) Anmeldenummer: 10749889.1
(22) Anmeldetag: 09.09.2010
(51) Int. Cl.: G01C 19/56, G01C 19/574

(54) **DOPPELAXIALER, SCHOCKROBUSTER, DREHRATENSENSOR MIT LINEAREN UND ROTATORISCHEN SEISMISCHEN ELEMENTEN**
BIAXIAL, SHOCK-ROBUST ROTATION RATE SENSOR HAVING LINEAR AND ROTATING SEISMIC ELEMENTS
CAPTEUR DE VITESSE DE ROTATION À DOUBLE AXE AVEC ÉLEMENTS SISMIQUES LINÉAIRES ET ROTATIFS

(30) Priorität: 09.09.2009 DE 102009029310; 09.09.2009 DE 102009029311
(43) Veröffentlichungstag der Anmeldung: 18.07.2012
(73) Patentinhaber: Continental Teves AG & Co. oHG, 60488 Frankfurt (DE)
(72) Erfinder: SCHMID, Bernhard, 61169 Friedberg (DE); GÜNTHNER, Stefan, 60489 Frankfurt (DE)
(86) Internationale Anmeldenummer: PCT/EP2010/063248
(87) Internationale Veröffentlichungsnummer: WO 2011/029878

(56) Entgegenhaltungen:
- DE-A1- 10 300 682
- DE-A1-102007 012 163
- DE-A1-102007 054 505
- JP-A- 2007 108 044

## Beschreibung

Die Erfindung betrifft einen mikromechanischen Drehratensensor gemäß Oberbegriff von Anspruch 1 sowie dessen Verwendung in Kraftfahrzeugen.

Druckschrift WO 2006070059 A1 beschreibt einen Drehratensensor zur Messung von Drehbewegungen um die y-Achse. Er besteht aus zwei seismischen Massen, die während der Antriebsmode in Antiphase bzw. gegenphasig um ihren Schwerpunkt um die z-Achse (senkrecht zur Substratebene) oszillieren. Im Falle einer Drehrate um die y-Achse oszillieren beide Massen in Antiphase um ihren Schwerpunkt um die x-Achse - Auslesemode. Diese Anordnung ist relativ robust gegenüber externen Störungen, da während der Antriebsmode der Gesamtschwerpunkt der Anordnung in Ruhe bleibt und der Sensor somit insensitiv gegenüber Aufbaueinflüssen ist. Ferner lassen sich beide Moden - Antriebs- und Auslesemode aufgrund ihrer Anordnung weder bzw. kaum durch externe lineare noch durch externe rotatorische Anregungen direkt anregen.

Druckschrift WO 2006113162 A1 beschreibt einen Drehratensensor zur Messung von Drehbewegungen um die z-Achse. Er besteht aus vier seismischen Massen, die während der Primärbewegung bzw. Antriebsmode in x-Richtung so oszillieren, dass sich jeweils direkt benachbarte Massen in Gegenphase bewegen. Im Falle einer Drehrate um die z-Achse oszillieren die vier seismischen Massen in y-Richtung so, dass sich jeweils direkt benachbarte Massen in Gegenphase bewegen. Auch diese Anordnung ist recht robust gegenüber externen Störungen, da während der Primärbewegung der Gesamtschwerpunkt der Anordnung in Ruhe bleibt und der Sensor somit insensitiv gegenüber Aufbaueinflüssen ist. Ferner lassen sich beide Moden, Antriebs- und Auslesemode, aufgrund ihrer Anordnung weder durch externe lineare noch durch externe rotatorische Anregungen direkt anregen.

Die Druckschriften WO 2004097432 A1, WO 2008021534 A1, DE 102006052522, DE 102005051048, US 6892575, EP 1832841 und WO 2008051677 beschreiben Sensoren, die gleichzeitig Drehbewegungen um die x- und um die y-Achse messen können - also keine Drehbewegungen senkrecht zur Grundfläche des Substrats, welches beispielgemäß parallel zur x- und y- Achse ausgebildet ist. Die erwähnten Sensorprinzipien sind Ein-Chip-Lösungen; d.h. die Sensorelemente zur Messung der orthogonalen Drehraten befinden sich auf demselben monolithschen Siliziumchip. Ferner ist ihnen gemeinsam, dass für beide sensitiven Achsen nur eine einzige Primärbewegung angeregt wird. Das erspart regelungstechnischen Aufwand; ferner ist die Chipfläche kleiner als bei zwei separaten Sensoren. Im Falle einer Coriolis-Kraft aufgrund einer Drehbewegung um die x-, bzw. y-Achse werden Oszillationen mit Bewegungsanteilen in z-Richtung angeregt. Will man mit diesen Sensoren Drehgeschwindigkeiten um die z-Achse messen, muss man die Sensoren durch Aufbau- und Verbindungstechnik aufstellen, also um 90° zur planaren Vorzugsrichtung - der Waferebene - montieren. Das führt zu zusätzlichen Kosten.

In der Druckschrift EP 1918723 wird ein Gyroskop vorgestellt, das gleichzeitig Drehbewegungen um die x- und um die z-Achse messen kann. Auch hierbei handelt es sich um eine Ein-Chip-Lösung mit einer einzigen Primärmode bzw. Antriebsmode. Dieser Sensor hat allerdings den Nachteil, dass die beide Auslesemoden - auch Sekundär- (Detektion der Drehung um die z-Achse) und Tertiärmode (Detektion der Drehung um die x-Achse) genannt - direkt durch Rotationsbewegungen angeregt werden können, was zu Störempfindlichkeiten des Sensors gegenüber Umwelteinflüssen führt.

Druckschrift WO 9817973 A1 stellt ein dreiachsiges Gyroskop vor. Dabei schwingen in der Antriebsmode vier um jeweils 90° versetzte Massen in radialer Richtung. Diese Anordnung kann Corioliskräfte in alle drei Raumrichtungen unterscheiden. Jedoch sind die einzelnen Massen nicht direkt miteinander verbunden, so dass es beispielsweise bei Linearbeschleunigungen senkrecht zur Substratebene zu Auslenkung der einzelnen Massen aus der Substratebene kommt.

Die Druckschriften DE 10 2007 012163 A1, DE 10 2007 054505 A1, DE 103 00 682 A1 und JP 2007 108044 A offenbaren darüber hinaus gattungsähnliche Sensoren.

Die Erfindung hat sich die Aufgabe gestellt, einen mikromechanischen Drehratensensor vorzuschlagen, der Drehraten um zumindest zwei sensitive Achsen erfassen kann und dabei relativ robust gegenüber Störungen ausgelegt ist.

Diese Aufgabe wird erfindungsgemäß gelöst durch den mikromechanischen Drehratensensor gemäß Anspruch 1.

Die hier beschriebene Erfindung bzw. der erfindungsgemäße Drehratensensor zeigt insbesondere eine gegenüber dem Stand der Technik verbesserte Methode zur Messung von Drehgeschwindigkeiten mittels eines doppelt differentiellen Ausleseprinzips.

Der Erfindung liegt vorzugsweise der Gedanke zu Grunde, einen Drehratensensor vorzuschlagen, der ein Substrat umfasst, dessen Grundfläche parallel zur x-y Ebene eines kartesischen Koordinatensystems ausgerichtet ist. Dabei weist der Drehratensensor zumindest eine erste und eine zweite seismischen Masse auf, die mit wenigstens einer ersten Antriebseinrichtung so gekoppelt sind und die so aufgehängt sind, dass die erste und die zweite seismische Masse in einer Antriebsmode gegenphasig auslenkend angetrieben werden, wobei der Drehratensensor so ausgebildet ist, dass er Drehraten um zumindest zwei zueinander im Wesentlichen orthogonale sensitive Achsen erfassen kann. Außerdem sind zumindest die erste und die zweite seismische Masse so ausgebildet und aufgehängt, dass sie beim Erfassen einer ersten Drehrate um die erste sensitive Achse in einer ersten Auslesemode gegenphasig schwingen bzw. ausgelenkt werden und die erste und zweite seismische Masse und/oder zusätzliche seismische Massen so ausgebildet und aufgehängt sind, dass sie beim Erfassen einer zweiten Drehrate um die zweite sensitive Achse in einer zweiten Auslesemode gegenphasig schwingen bzw. ausgelenkt werden, wobei den seismischen Massen Ausleseeinrichtungen zugeordnet sind, die so ausgebildet und bezüglich der seismischen Massen angeordnet sind, dass sie die Auslenkungen der seismischen Massen hinsichtlich der ersten und hinsichtlich der zweiten Auslesemode jeweils in Phase und in Gegenphase erfassen. Die Phase und Gegenphase entsprechend dabei bevorzugt der Gegenphasigkeit der Auslenkungen bzw. Schwingung der ersten und zweiten seismischen Massen und/oder zusätzlicher seismischer Massen.

Es ist bevorzugt, dass zumindest der ersten und der zweiten seismischen Masse jeweils zwei Ausleseeinrichtungen zugeordnet sind.

Unter dem Begriff gegenphasig wird vorzugsweise auch gegenläufig bzw. in gleicher Richtung, linear oder auf einer gekrümmten Bahn, mit zueinander inverser Orientierung verstanden, insbesondere paarweise bezogen jeweils auf ein Paar seismischer Masse, besonders bevorzugt die erste und zweite seismische Masse und jeweils ein Paar der zusätzlichen seismischen Massen.

Unter einer linearen Auslenkung oder Schwingung wird bevorzugt eine translatorische Auslenkung oder Schwingung verstanden.

Die Phase und die Gegenphase werden zweckmäßigerweise jeweils separat erfasst, insbesondere durch jeweils separate Ausleseeinrichtungen.

Es ist bevorzugt, dass die erste und zweite seismische Masse mittels zumindest einer Koppelfeder gekoppelt sind, wobei die Koppelfeder so ausgebildet ist, dass diese seismischen Massen rotatorisch nur gegenphasig auslenken und ein gleichphasiges, rotatorisches Auslenken unterdrückt wird, insbesondere sind erste und zweite seismische Masse zusätzlich so an jeweils wenigstens einem Anker aufgehängt bzw. am Substrat aufgehängt, dass lineare Auslenkungen dieser seismischen Massen in jede Richtung im Wesentlichen unterdrückt werden.

Die wenigstens eine Antriebseinrichtung und/oder die zumindest eine Ausleseeinrichtung sind bevorzugt als kapazitive Kammstrukturen oder Plattenstrukturen ausgebildet, wobei die Antriebseinrichtung elektrostatisch anregt und die Ausleseeinrichtung elektrostatisch erfasst.

Der Drehratensensor ist vorzugsweise monolithisch bzw. auf einem einzigen Chip bzw. einstückig ausgebildet, weshalb die Ausrichtung beider sensitiver Achsen zueinander wesentlich genauer erfolgen kann, als bei der Aufteilung auf zwei Chips zur Sensierung von Drehraten um unterschiedliche Achsen, da die Ausrichtung der Achsen durch die mikromechanische Herstellung definiert ist, die um Größenordnungen präziser ist im Vergleich zu konventioneller Aufbau- und Verbindungstechnik, mit der zwei separate Sensoren zueinander ausgerichtet werden können. Ferner ist auch die Handhabung eines Ein-Chip-Sensorelementes, das Drehbewegungen um zwei sensitive Achsen erfassen kann, einfacher als die Handhabung zweier separater Sensorelemente.

Der Drehratensensor weist bevorzugt eine einzige Antriebseinrichtung auf, welche sämtliche seismische Massen des Drehratensensors antreibt, wozu die seismischen Massen entsprechend aufgehängt und mit dieser Antriebseinrichtung direkt oder indirekt gekoppelt sind. Hierdurch wird der regelungstechnische Aufwand geringer im Vergleich zu zwei separaten Sensoren mit zwei getrennten Antriebseinheiten, da während der gesamten Betriebszeit die Antriebsschwingung bzw. Antriebsmode (auch Primärschwingung genannt) aufrechterhalten werden muss, wozu oft eine Phase-Locked-Loop, sowie eine Amplitudenregelung notwendig sind. Eine einzige Antriebseinrichtung ermöglicht signifikante Einsparungen an ASIC-Fläche und Stromverbrauch bzw. Energieverbrauch und damit kostengünstigere Signalverarbeitungen. Ferner lässt sich durch die gemeinsame Nutzung einer einzigen Antriebseinheit Platz sparen, so dass mehr Sensoren auf einem Siliziumwafer Platz finden und so die Sensoren kostengünstiger hergestellt werden können.

Vorzugsweise ist der Drehratensensor so ausgebildet und die seismischen Massen sind so angeordnet, dass der Schwerpunkt des gesamten Drehratensensors bezüglich der Auslenkungen der seismischen Massen in der Antriebsmode im Wesentlichen in Ruhe bleibt.

Der Drehratensensor ist vorzugsweise so ausgebildet, dass die erste sensitive Achse in der x-y-Ebene, also in der Grundfläche des Substrats, liegt, insbesondere dass die erste sensitive Achse parallel zur x-Achse oder zur y-Achse ausgebildet bzw. ausgerichtet ist, und dass die zweite sensitive Achse parallel zur z-Achse, also senkrecht zur Grundfläche des Substrats, ausgebildet ist.

Es ist bevorzugt, dass sämtliche seismische Massen des Drehratensensors so ausgebildet, aufgehängt und gekoppelt sind, dass sie ausschließlich beweglich aufgehängt sind für ihre jeweiligen Auslenkungen innerhalb der Antriebsmode, für ihre jeweiligen Auslenkungen innerhalb der ersten Auslesemode, wobei dies nur die seismischen Massen betrifft, welche bei Erfassung einer Drehrate um die erste sensitive Achse in der ersten Auslesemode schwingen, und für ihre jeweiligen Auslenkungen innerhalb der zweiten Auslesemode, wobei dies nur die seismischen Massen betrifft, welche bei Erfassung einer Drehrate um die zweite sensitive Achse in der zweiten Auslesemode schwingen, und dass diese Auslenkungen für die seismischen Massen, welche in der jeweiligen Mode schwingen, gegenphasig erfolgt, wobei die seismischen Massen bezüglich aller anderen Auslenkungen steif aufgehängt sind.

Erfindungsgemäß sind die erste und die zweite seismische Masse so aufgehängt und werden so angetrieben, dass sie gegenphasig in einer rotatorischen Antriebsmode schwingen, insbesondere in einer rotatorischen Antriebsmode um die z-Achse.

Zweckmäßigerweise weist der Drehratensensor zusätzliche seismische Massen auf, insbesondere vier zusätzliche seismische Massen, welche in einer Ruhelage bezogen auf den Schwerpunkt des gesamten Drehratensensors symmetrisch angeordnet und aufgehängt sind.

Die erste und zweite seismische Masse sind bevorzugt so aufgehängt und/oder gekoppelt, dass sie ausschließlich gegenphasige, rotatorische Auslenkungen um die z-Achse und um die x-Achse ausführen können und die zusätzlichen seismischen Massen sind besonders bevorzugt so aufgehängt und/oder gekoppelt, dass sie ausschließlich lineare Auslenkungen in Richtung der x-Achse und in Richtung der y-Achse ausführen können.

Es ist zweckmäßig, dass jede der zusätzlichen seismischen Massen an einem jeweils zugeordneten Rahmen, insbesondere jeweils im inneren Bereich des Rahmens, zumindest teilweise aufgehängt ist, welcher jeweils mit der ersten oder der zweiten seismischen Masse gekoppelt ist, wodurch insbesondere die Antriebsenergie für die Antriebsmode von der ersten und der zweiten seismischen Masse über die jeweils koppelnden Federelemente auf die Rahmen und auf die daran zumindest teilweise aufgehängten zusätzlichen seismischen Massen übertragen wird. Der Rahmen kann dabei offen oder geschlossen ausgebildet sein.

Die Rahmen sind bevorzugt so aufgehängt, dass sie ausschließlich lineare Auslenkungen in Richtung der x-Achse ausführen können.

Zweckmäßigerweise ist jeweils ein Paar der zusätzlichen seismischen Massen mittels eines Kopplungsbalkens so gekoppelt, dass sie nur gegenphasige Auslenkungen bezüglich der zweiten Auslesemode ausführen können, insbesondere in y-Richtung.

Wenn die Ausführbarkeit von Auslenkungen bzw. Schwingungen, beispielsweise mit "ausschließlich" oder "nur", eingeschränkt ist bzw. wird, sind alle anderen Bewegungen zweckmäßigerweise nicht möglich. Wenn beispielsweise nur lineare Auslenkungen in y-Richtung möglich sind, sind sämtliche rotatorische Auslenkungsformen nicht möglich sowie keine Auslenkungen in x- oder z-Richtung.

Unter einem seismischen Element wird bevorzugt eine seismische Masse verstanden.

Es ist zweckmäßig, dass hinsichtlich der Antriebsmode, bei der Übertragung der Antriebsenergie, die Auslenkung und Phasenlage der Rahmen und der zusätzlichen seismischen Massen der Auslenkungskomponente in x-Richtung der freien Enden der ersten bzw. zweiten seismischen Masse an den Koppelfedern bzw. an koppelnden Federelementen, jeweils zwischen erster oder zweiter seismischer Masse und dem jeweiligen Rahmen entspricht.

Es ist zweckmäßig, dass die Auslenkung der seismischen Massen, welche in einer der Auslesemoden schwingen doppelt differentiell erfasst wird, wobei bezüglich der gegenphasigen Auslenkung für Phase und für Gegenphase jeweils zwei gegenläufige Auslenkungen erfasst werden, also den seismischen Massen, die in einer der Auslesemoden schwingen, insgesamt mindestens vier Ausleseeinrichtungen zugeordnet sind. Diese vier Ausleseeinrichtungen werden dabei insbesondere doppelt differentiell ausgewertet.

Die Erfindung bezieht sich auch auf ein Verfahren zur Herstellung des mikromechanischen Drehratensensors.

Die Erfindung betrifft außerdem die Verwendung des Drehratensensors in Kraftfahrzeugen, insbesondere zur Erfassung der Gierrate, also einer Drehung um die Hochachse des Fahrzeugs, und zur Erfassung einer Rollrate oder einer Nickrate. Ergänzend oder alternativ vorzugsweise findet diese Anordnung Anwendung bei der gleichzeitigen Messung von Gierrate und Rollrate, Gierrate und Nickrate oder Rollrate und Nick-rate in Fahrzeugen. Diese Informationen dienen zur Erfassung und Kontrolle von fahrdynamischen Situationen in ESP-, Insassenschutz- und Komfortregelungssystemen. Sensoren,'die in diesem Bereich eingesetzt werden, müssen hohe Genauigkeit der Drehratenmessung und möglichst geringes Signal-RauschVerhältnis liefern. Eine weitere Anforderung an diese Sensoren ist hohe Stabilität unter externen Störungen, wie mechanische Vibrationen und Schocks. Der hier vorgestellte Sensor ist vorzugsweise so ausgelegt, dass er all diese Forderungen, insbesondere aber die Vibrationsrobustheit, erfüllen kann.

Weitere bevorzugte Ausführungsformen ergeben sich aus den nachfolgenden Beschreibungen von Ausführungsbeispielen an Hand von Figuren.

Es zeigen in beispielhafter, schematischer Darstellung
- Fig. 1: einen dualaxialen Drehratensensor in perspektivischer Darstellung,
- Fig. 2: einen dualaxialen Drehratensensor in Draufsicht,
- Fig. 3: die Primärmode bzw. Antriebsmode eines solchen Drehratensensors mit Ausleseeinheiten,
- Fig. 4: die Primärmode bzw. Antriebsmode eines solchen Drehratensensors ohne Ausleseeinheiten,
- Fig. 5: die Sekundärmode bzw. zweite Auslesemode dieses Drehratensensors beim Erfassen einer zweiten Drehrate um die zweite sensitive Achse,
- Fig. 6: die Tertiärmode bzw. erste Auslesemode dieses Drehratensensors beim Erfassen einer ersten Drehrate um die erste sensitive Achse,
- Fig. 7: beispielhafte parasitäre Moden bei einem solchen Drehratensensor, und
- Fig. 8: ein Ausführungsbeispiel des Drehratensensors mit Antrieb, Antriebskontrolle und Trimmstrukturen.

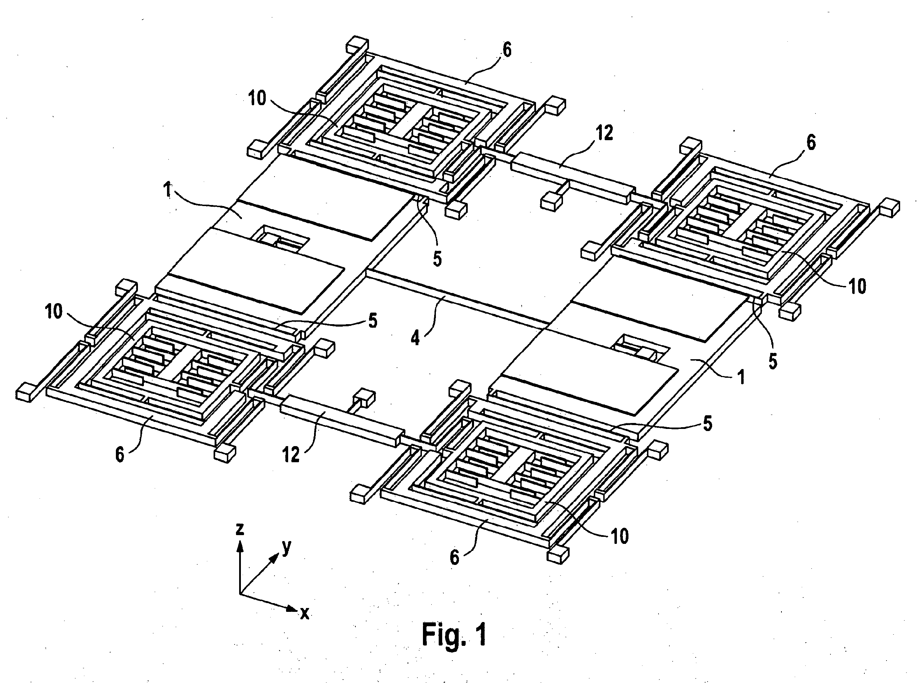

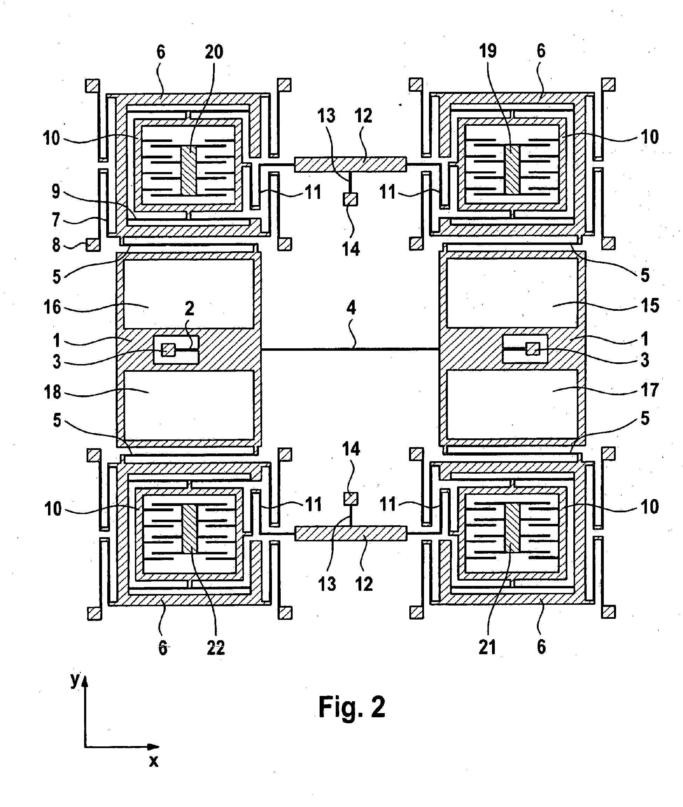

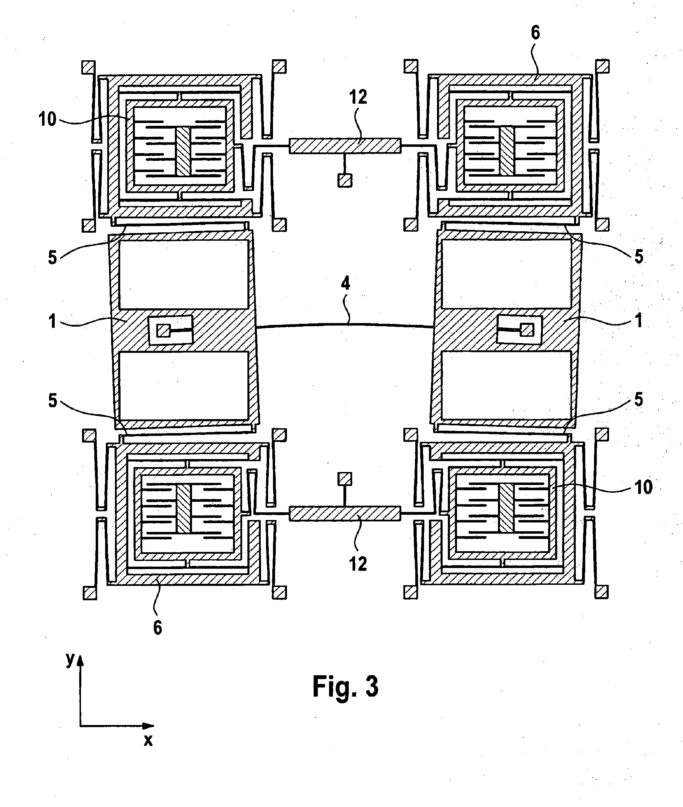

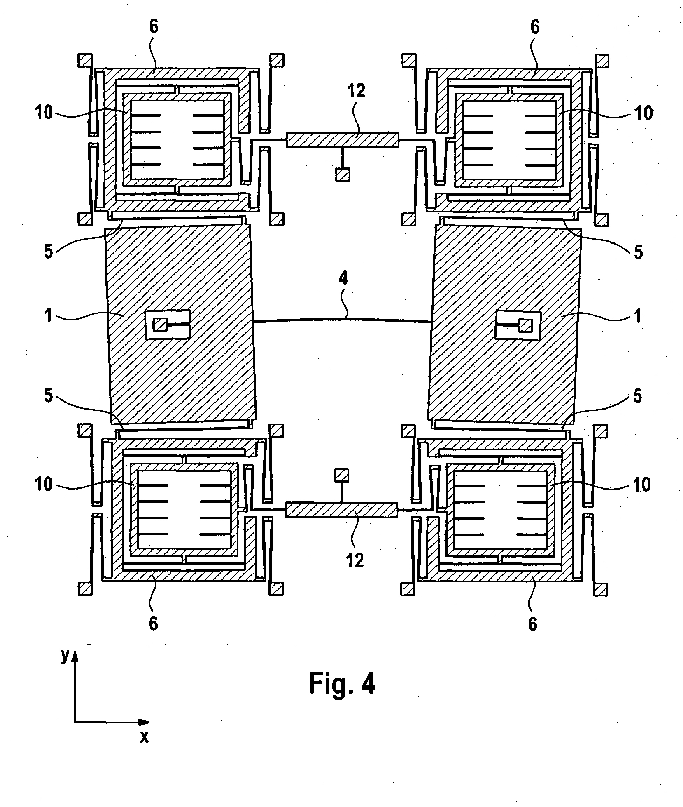

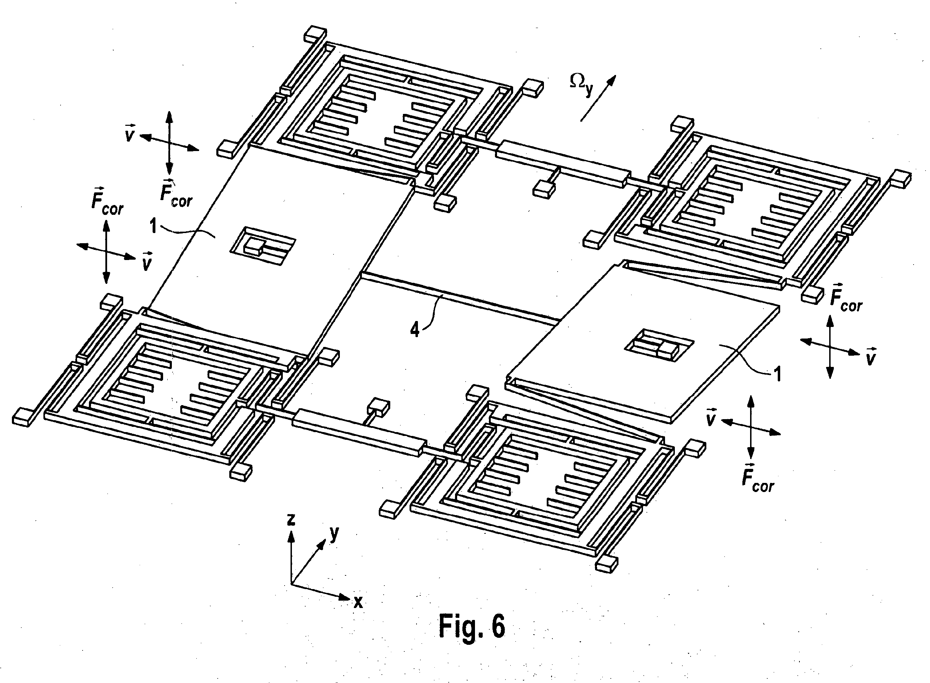

In Fig. 1 und Fig. 2 ist ein beispielhafter Drehratensensor abgebildet, der sowohl Drehgeschwindigkeiten um die z-Achse, als zweite sensitive Achse, als auch um die y-Achse, als erste sensitive Achse erfassen kann. Der Sensor besteht aus zwei Massen 1, als erste und zweite seismische Masse, die über Federelemente 2, 4 so mit Ankern 3, bzw. miteinander verbunden sind, dass sie rotatorische Bewegungen um die z-Achse ausführen können, wobei sich erste und zweite seismische Masse 1 gegenphasig im Rahmen der Antriebsmode bzw. Antriebsschwingung bzw. Primärmode bewegen, siehe Fig. 3 und Fig. 4. Die Aufhängung der ersten und zweiten seismischen Masse 1 erlaubt ferner rotatorische Bewegungen um die x-Achse, wobei Koppelfeder 4 auch in dieser Schwingung eine Kopplung beider Massen 1 herstellt. Dadurch gibt es eine Mode, als erste Auslesemode, in der seismische Massen 1 gegenphasig bzw. in Gegenrichtung um die y-Achse schwingen, siehe Fig. 6. Außer zueinander gegenphasigen Rotationen um die x- und z- Achse können die seismischen Massen 1, als erste und zweite seismische Masse, keine Bewegung vollführen.

An die seismischen Massen 1 sind über koppelnde Federelemente 5 Rahmen 6 so befestigt, dass sich die Rahmen 6 in y-Richtung unabhängig von den Massen 1 frei bewegen können, dass aber die Auslenkung der Rahmen 6 in x-Richtung der Auslenkung der freien Enden der seismischen Massen 1 an der Ankoppelstelle der Federelemente 5 entspricht. Die Rahmen 6 wiederum sind über Federelemente 7 so mit Ankern 8 verbunden, dass sie sich in erster Linie nur in x-Richtung linear bewegen können. Auslenkungen entlang anderer Freiheitsgrade sind unterdrückt. Die koppelnden Federelemente 5 gewährleisten eine Umwandlung der rotatorischen Bewegung von seismischen Massen 1 in eine lineare Bewegung der Rahmen 6. Mit jeder der beiden seismischen Massen 1 sind zwei Rahmen 6 über die koppelnden Federelemente 5 so verbunden, dass sich die Rahmen 6 in x- Richtung gegenphasig als Antriebsmode für zusätzliche seismische Massen 10 mit gleicher Auslenkung bewegen. Eine gleichphasige Bewegung in x- Richung dieser Rahmen 6 ist nicht möglich.

Mit den Rahmen 6 sind über Federelemente 9 die zusätzlichen seismischen Massen 10 so verbunden, dass die Auslenkung der freien Enden der ersten und zweiten seismischen Masse 1 in - x-Richtung über die Rahmen 6 eins zu eins übertragen wird. Die zusätzlichen seismischen Massen 10 besitzen noch zusätzlich einen Freiheitsgrad in y-Richtung, ermöglicht durch die Federn 9.

Zwei der vier zusätzlichen seismischen Massen 10 sind jeweils über Federelemente 11, 13 und Kopplungsbalken 12 so miteinander, bzw. mit Ankern 14 verbunden, dass sie sich nur gegenphasig in y-Richtung mit gleicher Auslenkung bewegen können. Die Kopplungsbalken 12 sind dabei über das Federelement 13 so mit dem Anker 14 verbunden, dass in erster Linie nur eine Rotation des Kopplungsbalkens 12 um die z-Achse möglich ist. Die Federelemente 11 erlauben eine lineare Bewegung der zusätzlichen seismischen Massen 10 bei gleichzeitig rotatorischer Bewegung der Kopplungsbalken 12 und übertragen die Auslenkung des freien Endes der Kopplungsbalken in y-Richtung auf die zusätzlichen seismischen Massen 10.

Der Drehratensensor weist beispielgemäß insgesamt drei Eigenmoden auf: die Primär- bzw. Antriebsmode, Sekundär- bzw. zweite Auslesemode und die Tertiärmode bzw. erste Auslesemode. Um Drehgeschwindigkeiten zu messen, muss der Sensor zunächst in der Primärmode bzw. Antriebsmode Fig. 4 betrieben werden. Diese ist charakterisiert dadurch, dass die erste und zweite seismische Masse 1 gegenphasig zueinander um die z-Achse rotieren; gleichzeitig bewegen sich die Rahmen 6 zusammen mit den zusätzlichen seismischen Massen 10 linear in x-Richtung, wobei die lineare Auslenkung und Phasenlage der Rahmen 6 und Massen 10 der x-Komponente der Auslenkung der freien Enden der Massen 1 an der Stelle der koppelnden Federelemente 5 entspricht. Der Schwerpunkt der gesamten Anordnung bleibt während der Primärbewegung in Ruhe. Der Antrieb der Primärmode kann z.B. über elektrostatische Anregung mithilfe von kapazitiven Kammstrukturen erfolgen.

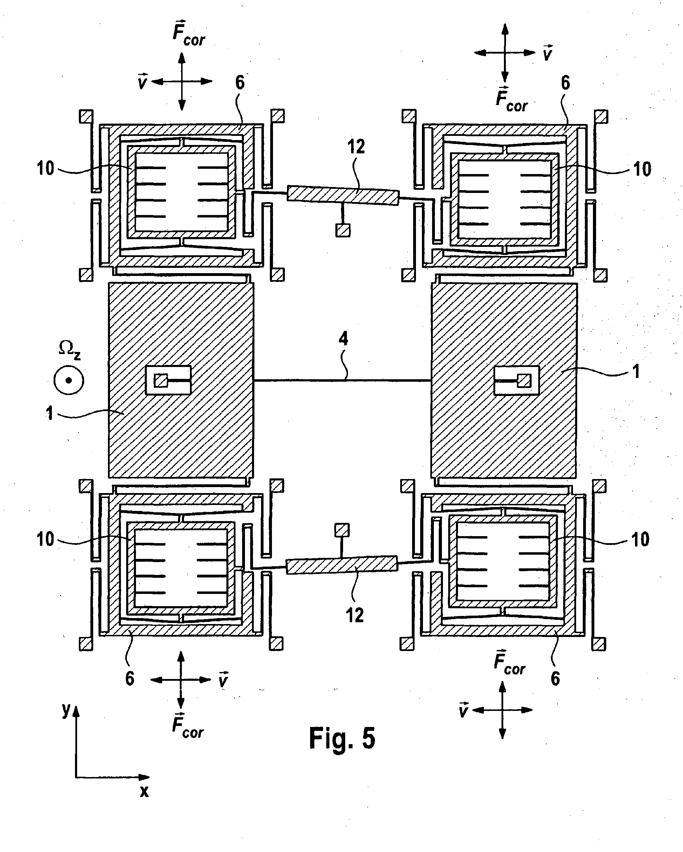

Im Falle einer Drehung des Sensors um die z-Achse, als zweite sensitive Achse, treten Scheinkräfte auf die bewegten Massen auf. Dabei wirken auf die zusätzlichen seismischen Massen 10 Corioliskräfte mit identischen Amplituden, aber verschiedenen Phasenlage, also erfolgt eine gegenphasige Auslenkung. Die Phasenbeziehungen leiten sich aus der Phasenlage der Geschwindigkeit der zusätzlichen seismischen Massen 10 während der Primärbewegung ab; die Corioliskräfte wirken so, dass die Sekundärmode angeregt wird, siehe Fig. 5. Die Corioliskraft aufgrund einer Rotation Ω̅ eines Massenpunktes m bzgl. eines Inertialsystems, der sich mit einer Geschwindigkeit *v̅* bzgl des bewegten Koordinatensystems bewegt, lautet: *F̅_{cor}* = 2 *m v̅* × Ω̅*.*

Im Falle einer Drehung des Sensors um die y-Achse treten Scheinkräfte auf die bewegten Massen auf. Dabei wirken auf die erste und zweite seismische Masse 1 Corioliskräfte so, dass die Tertiärmode, als erste Auslesemode, angeregt wird, siehe Fig. 6.

Die Auslenkungen der Sekundär-, als zweite Auslesemode, bzw. Tertiärschwingung, als erste Auslesemode, im Falle einer Corioliskraft ist u.a. proportional zur sie erzeugenden Drehgeschwindigkeit Ω_{z}, bzw. Ω_{y}. Die Auslenkungen können z. B. durch kapazitive Elemente erfasst werden, die die mechanische Auslenkung in ein kapazitives Signal wandeln.

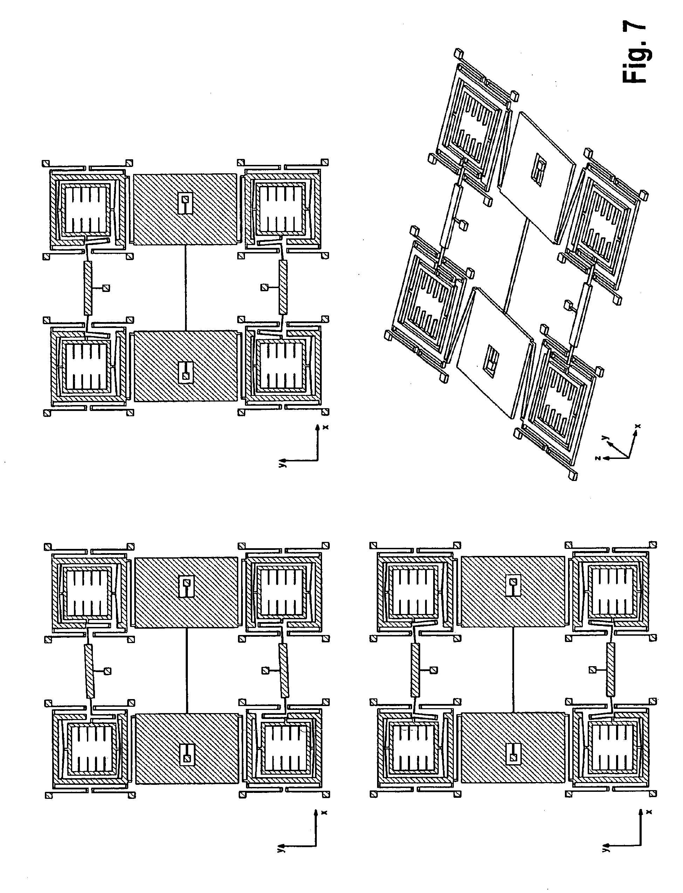

Die Ausleseeinrichtungen 19, 20, 21 und 22 detektieren Auslenkungen der zusätzlichen seismischen Massen 10 in y-Richtung und sind so verschaltet, dass die Differenz der Summe der Kapazitätsänderungen der Ausleseeinrichtungen 19 und 20 von der Summe der Kapazitätsänderungen der Ausleseeinrichtungen 21 und 22 als Ausgangssignal verwendet wird. Diese Art der doppelt differentiellen Auslesung detektiert lediglich die Sekundärmode, bzw. zweite Auslesemode, und ist insensitiv gegenüber anderweitigen Eigenmoden, bei denen sich die zusätzlichen seismischen Massen 10 in Richtung der y-Achse bewegen, siehe Fig. 7 oben links und rechts und unten links. Andere Anordnung der Kammstrukturen und angepasste Signalauswertung sind auch möglich.

Die Ausleseeinrichtungen 15, 16, 17 und 18 detektieren Auslenkungen der ersten und zweiten seismischen Massen 1 in z-Richtung und sind so verschaltet, dass die Differenz der Summe der Kapazitätsänderungen der Ausleseeinrichtungen 15 und 18 von der Summe der Kapazitätsänderungen der Ausleseeinrichtungen 16 und 17 als Ausgangssignal verwendet wird. Diese Art der doppelt differentiellen Auslesung detektiert lediglich die Tertiärmode bzw. erste Auslesemode und ist insensitiv gegenüber gleichphasigen Rotationen der seismischen Massen 1 um die x-Achse, siehe Fig. 7 unten rechts.

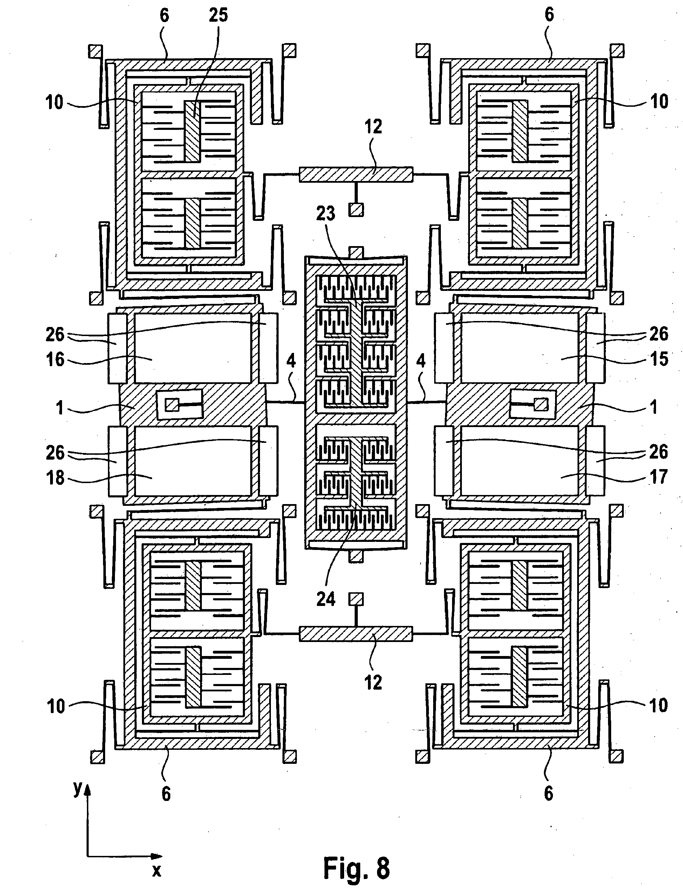

Fig. 8 zeigt ein Ausführungsbeispiel des Drehratensensors mit zusätzlichen Einrichtungen. Dieser weist eine einzige Antriebseinrichtung 23 auf, die in Fig. 1 bis 7 nur nicht dargestellt war. Antriebseinrichtung 23 greift, wie gezeigt, an der Verbindung, hier Koppelfeder 4, zwischen den rotatorisch aufgehängten ersten und zweiten seismischen Massen 1 an, oder - nicht dargestellt - alternativ an den seismischen Massen 1 selbst oder ebenfalls nicht dargestellt, an den linear schwingenden Rahmen 6. Zur Überwachung der Primärschwingung bzw. Antriebsmode werden in der Regel Antriebskontrollstrukturen 24 verwendet, die wie die Antriebseinrichtung 23 an der Koppelfeder 4 zwischen den rotatorisch aufgehängten Massen 1 angreifen.können, oder nicht dargestellt ebenfalls an den Massen 1 selbst oder an den linear schwingenden Rahmen 6. Der in Fig. 8 dargestellte Drehratensensor umfasst außerdem zusätzliche Aktoreinheiten, als Kammstrukturen 25 den zusätzlichen seismischen Massen 10 zugeordnet für die zweite Auslesemode und als Elektroden 26 der ersten und zweiten seismischen Masse 1 zugeordnet für die erste Auslesemode. Mit diesen zusätzlichen Aktoreinheiten können parasitären Signale ("Quadratur") getrimmt werden und/oder die Frequenz beeinflusst werden und/oder eine Rückstellung der Auslenkungen hinsichtlich der Auslesemoden durchgeführt werden ("Force-Feedback"). Beispielgemäß sind als Elektroden ausgebildete Ausleseeinrichtungen 15, 16, 17 und 18 über seismischen Massen 1 angeordnet und Elektroden 26 als zusätzliche Aktoreinheiten ebenfalls, seitlich, über seismischen Massen 1, diese berührungslos leicht überlappend angeordnet.

## Patentansprüche

1. Mikromechanischer Drehratensensor, umfassend ein Substrat, dessen Grundfläche parallel zur x-y Ebene eines kartesischen Koordinatensystems (x, y, z) ausgerichtet ist, wobei der Drehratensensor zumindest eine erste und eine zweite seismische Masse (1) aufweist, die mit wenigstens einer ersten Antriebseinrichtung (23) so gekoppelt sind und die so aufgehängt sind (3, 4), dass die erste und die zweite seismische Masse (1) in einer Antriebsmode gegenphasig auslenkend angetrieben werden, wobei der Drehratensensor so ausgebildet ist, dass er Drehraten um zumindest zwei zueinander im Wesentlichen orthogonale sensitive Achsen (z, y) erfassen kann, wobei zumindest die erste und die zweite seismische Masse (1) so ausgebildet und aufgehängt sind, dass sie beim Erfassen einer ersten Drehrate um die erste sensitive Achse (y) in einer ersten Auslesemode gegenphasig schwingen und die erste und zweite seismische Masse (1) und zusätzliche seismische Massen (10) so ausgebildet und aufgehängt (5, 7, 9, 11) sind, dass sie beim Erfassen einer zweiten Drehrate um die zweite sensitive Achse (z) in einer zweiten Auslesemode gegenphasig schwingen, wobei den seismischen Massen (1, 10) Ausleseeinrichtungen (15, 16, 17, 18, 19, 20, 21, 22) zugeordnet sind, die so ausgebildet und bezüglich der seismischen Massen (1, 10) angeordnet sind, dass sie die Auslenkungen der seismischen Massen (1, 10) hinsichtlich der ersten und hinsichtlich der zweiten Auslesemode jeweils in Phase und in Gegenphase erfassen, **dadurch gekennzeichnet, dass** die erste und die zweite seismische Masse (1) so aufgehängt (3, 4) sind und angetrieben (23) werden, dass sie gegenphasig in einer rotatorischen Antriebsmode in der Grundfläche des Substrates schwingen.

2. Drehratensensor nach Anspruch 1, **dadurch gekennzeichnet, dass** die erste und zweite seismische Masse (1) mittels zumindest einer Koppelfeder (4) gekoppelt sind, wobei die Koppelfeder (4) so ausgebildet ist, dass diese seismischen Massen (1) rotatorisch nur gegenphasig auslenken und ein gleichphasiges, rotatorisches Auslenken unterdrückt wird, insbesondere sind erste und zweite seismische Masse (1) zusätzlich so an jeweils wenigstens einem Anker (3) aufgehängt, dass lineare Auslenkungen dieser seismischen Massen (1) in jede Richtung (x, y, z) im Wesentlichen unterdrückt werden.

3. Drehratensensor nach Anspruch 1 oder 2, **dadurch gekennzeichnet, dass** der Drehratensensor eine einzige Antriebseinrichtung (23) aufweist, welche sämtliche seismischen Massen (1, 10) des Drehratensensors antreibt, wozu die seismischen Massen (1, 10) entsprechend aufgehängt (4, 5, 9) und mit dieser Antriebseinrichtung (23) direkt oder indirekt gekoppelt sind.

4. Drehratensensor nach mindestens einem der Ansprüche 1 bis 3, **dadurch gekennzeichnet, dass** der Drehratensensor so ausgebildet ist und die seismischen Massen (1, 10) so angeordnet sind, dass der Schwerpunkt des gesamten Drehratensensors bezüglich der Auslenkungen der seismischen Massen (1, 10) in der Antriebsmode im Wesentlichen in Ruhe bleibt.

5. Drehratensensor nach mindestens einem der Ansprüche 1 bis 4, **dadurch gekennzeichnet, dass** der Drehratensensor so ausgebildet ist, dass die erste sensitive Achse (y) in der x-y-Ebene, also in der Grundfläche des Substrats liegt, insbesondere dass die erste sensitive Achse parallel zur x-Achse oder zur y-Achse ausgebildet ist, und dass die zweite sensitive Achse (z) parallel zur zAchse, also senkrecht zur Grundfläche des Substrats, ausgebildet ist.

6. Drehratensensor nach mindestens einem der Ansprüche 1 bis 5, **dadurch gekennzeichnet, dass** sämtliche seismischen Massen (1, 10) des Drehratensensors so ausgebildet, aufgehängt (3, 5, 6, 7, 9, 11) und gekoppelt (4, 12) sind, dass sie ausschließlich beweglich aufgehängt sind für ihre jeweiligen Auslenkungen innerhalb der Antriebsmode, für ihre jeweiligen Auslenkungen innerhalb der ersten Auslesemode, wobei dies nur die seismischen Massen (1) betrifft, welche bei Erfassung einer Drehrate um die erste sensitive Achse (y) in der ersten Auslesemode schwingen, und für ihre jeweiligen Auslenkungen innerhalb der zweiten Auslesemode, wobei dies nur die seismischen Massen (10) betrifft, welche bei Erfassung einer Drehrate um die zweite sensitive Achse (z) in der zweiten Auslesemode schwingen, und dass diese Auslenkungen für die seismischen Massen (1, 10), welche in der jeweiligen Mode schwingen, gegenphasig erfolgt, wobei die seismischen Massen (1, 10) bezüglich aller anderen Auslenkungen steif aufgehängt sind.

7. Drehratensensor nach Anspruch 1, **dadurch gekennzeichnet, dass** die erste und die zweite seismische Masse (1) so aufgehängt (3, 4) sind und angetrieben (23) werden, dass sie gegenphasig in einer rotatorischen Antriebsmode um die z-Achse schwingen.

8. Drehratensensor nach mindestens einem der Ansprüche 1 bis 7, **dadurch gekennzeichnet, dass** der Drehratensensor zusätzliche seismische Massen (10) aufweist, insbesondere vier zusätzliche seismische Massen (10), welche in einer Ruhelage bezogen auf den Schwerpunkt des gesamten Drehratensensors symmetrisch angeordnet und aufgehängt sind.

9. Drehratensensor nach Anspruch 8, **dadurch gekennzeichnet, dass** die erste und zweite seismische Masse (1) so aufgehängt und/oder gekoppelt sind, dass sie ausschließlich gegenphasige, rotatorische Auslenkungen um die z-Achse und um die x-Achse ausführen können und dass die zusätzlichen seismischen Massen (10) so aufgehängt und/oder gekoppelt sind, dass sie ausschließlich lineare Auslenkungen in Richtung der x-Achse und in Richtung der y-Achse ausführen können.

10. Drehratensensor nach Anspruch 8 oder 9, **dadurch gekennzeichnet, dass** jede der zusätzlichen seismischen Massen (10) an einem jeweils zugeordneten Rahmen (6), insbesondere jeweils im inneren Bereich des Rahmens, zumindest teilweise aufgehängt (9) ist, welcher jeweils mit der ersten oder der zweiten seismischen Masse (1) gekoppelt (5) ist, wodurch insbesondere die Antriebsenergie für die Antriebsmode von der ersten und der zweiten seismischen Masse (1) über die jeweils koppelnden Federelemente (5) auf die Rahmen (6) und auf die daran zumindest teilweise aufgehängten zusätzlichen seismischen Massen (10) übertragen wird.

11. Drehratensensor nach Anspruch 10, **dadurch gekennzeichnet, dass** die Rahmen (6) so aufgehängt sind, dass sie ausschließlich lineare Auslenkungen in Richtung der x-Achse ausführen können.

12. Drehratensensor nach mindestens einem der Ansprüche 8 bis 11, **dadurch gekennzeichnet, dass** jeweils ein Paar der zusätzlichen seismischen Massen (10) mittels eines Kopplungsbalkens (12) so gekoppelt ist, dass sie nur gegenphasige Auslenkungen bezüglich der zweiten Auslesemode ausführen können.

13. Drehratensensor nach mindestens einem der Ansprüche 1 bis 12, **dadurch gekennzeichnet, dass** die Auslenkung der seismischen Massen (1, 10), welche in einer der Auslesemoden schwingen doppelt differentiell erfasst wird, wobei bezüglich der gegenphasigen Auslenkung für Phase und für Gegenphase jeweils zwei gegenläufige Auslenkungen erfasst werden, also den seismischen Massen (1, 10), die in einer der Auslesemoden schwingen, insgesamt mindestens vier Ausleseeinrichtungen (15, 16, 17, 18, 19, 20, 21, 22) zugeordnet sind.

14. Verwendung eines Drehratensensors nach mindestens einem der Ansprüche 1 bis 13 in Kraftfahrzeugen, insbesondere zur Erfassung der Gierrate, also einer Drehung um die Hochachse des Fahrzeugs, und zur Erfassung einer Rollrate oder einer Nickrate des Fahrzeugs.

## Claims

1. Micromechanical rotation rate sensor, comprising a substrate whose base surface is aligned parallel to the x-y plane of a Cartesian coordinate system (x, y, z), with the rotation rate sensor having at least one first and one second seismic mass (1) which are coupled to at least one first drive device (23) and are suspended (3, 4) such that the first and the second seismic masses (1) are driven such that they are deflected in antiphase in one drive mode, with the rotation rate sensor being designed such that it can detect rotation rates about at least two mutually essentially orthogonal sensitive axes (z, y), wherein at least the first and the second seismic masses (1) are designed and suspended such that they oscillate in antiphase in a first read mode when a first rotation rate about the first sensitive axis (y) is detected, and the first and second seismic masses (1) and additional seismic masses (10) are designed and suspended (5, 7, 9, 11) such that they oscillate in antiphase in a second read mode when a second rotation rate about the second sensitive axis (z) is detected, with the seismic masses (1, 10) being associated with read devices (15, 16, 17, 18, 19, 20, 21, 22) which are designed and arranged with respect to the seismic masses (1, 10) such that they detect the deflections of the seismic masses (1, 10) with respect to the first and with respect to the second read mode in each case in phase and in antiphase, **characterized in that** the first and the second seismic masses (1) are suspended (3, 4) and driven (23) such that they oscillate in antiphase in a rotational drive mode in the base surface of the substrate.

2. Rotation rate sensor according to Claim 1, **characterized in that** the first and second seismic masses (1) are coupled by means of at least one coupling spring (4), with the coupling spring (4) being designed such that these seismic masses (1) are rotationally deflected only in antiphase, and in-phase, rotational deflection is suppressed, in particular with the first and second seismic masses (1) additionally being suspended on in each case at least one anchor (3) such that linear deflections of these seismic masses (1) in any direction (x, y, z) are essentially suppressed.

3. Rotation rate sensor according to Claim 1 or 2, **characterized in that** the rotation rate sensor has a single drive device (23) which drives all the seismic masses (1, 10) of the rotation rate sensor, for which purpose the seismic masses (1, 10) are appropriately suspended (4, 5, 9,) and are directly or indirectly coupled to this drive device (23).

4. Rotation rate sensor according to at least one of Claims 1 to 3, **characterized in that** the rotation rate sensor is designed and the seismic masses (1, 10) are arranged such that the center of gravity of the entire rotation rate sensor remains essentially at rest with respect to the deflections of the seismic masses (1, 10) in the drive mode.

5. Rotation rate sensor according to at least one of Claims 1 to 4, **characterized in that** the rotation rate sensor is designed such that the first sensitive axis (y) lies on the x-y plane, that is to say in the base surface of the substrate, in particular **in that** the first sensitive axis is parallel to the x axis or to the y axis, and **in that** the second sensitive axis (z) is parallel to the z axis, that is to say at right angles to the base surface of the substrate.

6. Rotation rate sensor according to at least one of Claims 1 to 5, **characterized in that** all the seismic masses (1, 10) of the rotation rate sensor are designed, suspended (3, 5, 6, 7, 9, 11) and coupled (4, 12) such that they are suspended such that they can move exclusively for their respective deflections within the drive mode, for their respective deflections within the first read mode, with this relating only to the seismic masses (1) which oscillate in the first read mode when a rotation rate about the first sensitive axis (y) is detected, and for their respective deflections within the second read mode, with this relating only to the seismic masses (10) which oscillate in the second read mode when a rotation rate about the second sensitive axis (z) is detected, and **in that** these deflections take place in antiphase for the seismic masses (1, 10) which oscillate in the respective mode, with the seismic masses (1, 10) being suspended stiffly with respect to all other deflections.

7. Rotation rate sensor according to Claim 1, **characterized in that** the first and the second seismic masses (1) are suspended (3, 4) and driven (23) such that they oscillate in antiphase in a rotational drive mode about the z axis.

8. Rotation rate sensor according to at least one of Claims 1 to 7, **characterized in that** the rotation rate sensor has additional seismic masses (10), in particular four additional seismic masses (10), which are arranged and suspended symmetrically in a rest position with respect to the center of gravity of the entire rotation rate sensor.

9. Rotation rate sensor according to Claim 8, **characterized in that** the first and second seismic masses (1) are suspended and/or coupled such that they can exclusively carry out antiphase, rotational deflections about the z axis and about the x axis, and **in that** the additional seismic masses (10) are suspended and/or coupled such that they can exclusively carry out linear deflections in the direction of the x axis and in the direction of the y axis.

10. Rotation rate sensor according to Claim 8 or 9, **characterized in that** each of the additional seismic masses (10) is at least partially suspended (9) on a respectively associated frame (6), in particular in each case in the inner area of the frame, which is in each case coupled (5) to the first or to the second seismic mass (1), by which means, in particular, the drive energy for the drive mode is transmitted from the first and the second seismic masses (1) via the respectively coupling spring elements (5) to the frames (6) and to the additional seismic masses (10) which are at least partially suspended thereon.

11. Rotation rate sensor according to Claim 10, **characterized in that** the frames (6) are suspended such that they can exclusively carry out linear deflections in the direction of the x axis.

12. Rotation rate sensor according to at least one of Claims 8 to 11, **characterized in that** one pair of the additional seismic masses (10) is in each case coupled by means of a coupling beam (12) such that they can carry out only antiphase deflections with respect to the second read mode.

13. Rotation rate sensor according to at least one of Claims 1 to 12, **characterized in that** the deflection of the seismic masses (1, 10) which oscillate in one of the read modes is detected in a duplicated and differential manner, with in each case two opposing deflections being detected with respect to the antiphase deflection for phase and for antiphase, that is to say the seismic masses (1, 10) which oscillate in one of the read modes are associated overall with at least four read devices (15, 16, 17, 18, 19, 20, 21, 22).

14. Use of a rotation rate sensor according to at least one of Claims 1 to 13 in motor vehicles, in particular for detection of the yaw rate, that is to say rotation about the vertical axis of the vehicle, and for detection of a roll rate or a pitch rate of the vehicle.

## Revendications

1. Détecteur de vitesse de rotation micromécanique, comprenant un substrat dont la surface de base est orientée parallèlement au plan x-y d'un système de coordonnées cartésien (x, y, z), le détecteur de vitesse de rotation possédant au moins une première et une deuxième masse sismique (1), lesquelles sont couplées à au moins un premier dispositif d'entraînement (23) et lesquelles sont suspendues (3, 4) de telle sorte que la première et la deuxième masse sismique (1), dans un mode d'entraînement, sont entraînées dans une excursion en opposition de phase, le détecteur de vitesse de rotation étant configuré de telle sorte qu'il peut détecter des vitesses de rotation autour d'au moins deux axes de sensibilité (z, y) sensiblement orthogonaux l'un par rapport à l'autre, au moins la première et la deuxième masse sismique (1) étant configurées et suspendues de telle sorte que lors de la détection d'une première vitesse de rotation autour du premier axe de sensibilité (y), elles oscillent en opposition de phase dans un premier mode de lecture et la première et la deuxième masse sismique (1) ainsi que des masses sismiques supplémentaires (10) étant configurées et suspendues (5, 7, 9, 11) de telle sorte que lors de la détection d'une deuxième vitesse de rotation autour du deuxième axe de sensibilité (z), elles oscillent en opposition de phase dans un deuxième mode de lecture, des dispositifs de lecture (15, 16, 17, 18, 19, 20, 21, 22) étant associés aux masses sismiques (1, 10), lesquels sont configurés et disposés par rapport aux masses sismiques (1, 10) de telle sorte qu'ils détectent les excursions des masses sismiques (1, 10) pour ce qui concerne le premier et pour ce qui concerne le deuxième mode de lecture, respectivement en phase et en opposition de phase, **caractérisé en ce que** la première et la deuxième masse sismique (1) sont suspendues (3, 4) et sont entraînées (23) de telle sorte qu'elles oscillent dans la surface de base du substrat en opposition de phase dans un mode d'entraînement rotationnel.

2. Détecteur de vitesse de rotation selon la revendication 1, **caractérisé en ce que** la première et la deuxième masse sismique (1) sont couplées au moyen d'au moins un ressort de couplage (4), le ressort de couplage (4) étant configuré de telle sorte que ces masses sismiques (1) peuvent uniquement effectuer une excursion rotatoire en opposition de phase et une excursion rotatoire en phase est inhibée, la première et la deuxième masse sismique (1) étant notamment en plus suspendues à au moins un élément d'ancrage (3) respectif de telle sorte que les excursions linéaires de ces masses sismiques (1) dans chaque direction (x, y, z) sont sensiblement inhibées.

3. Détecteur de vitesse de rotation selon la revendication 1 ou 2, **caractérisé en ce que** le détecteur de vitesse de rotation possède un seul dispositif d'entraînement (23), lequel entraîne toutes les masses sismiques (1, 10) du détecteur de vitesse de rotation, les masses sismiques (1, 10) étant à cet effet suspendues (4, 5, 9) en conséquence et couplées directement ou indirectement à ce dispositif d'entraînement (23).

4. Détecteur de vitesse de rotation selon au moins l'une des revendications 1 à 3, **caractérisé en ce que** le détecteur de vitesse de rotation est configuré de telle sorte et les masses sismiques (1, 10) sont disposées de telle sorte que le centre de gravité de l'ensemble du détecteur de vitesse de rotation par rapport aux excursions des masses sismiques (1, 10) reste sensiblement au repos dans le mode d'entraînement.

5. Détecteur de vitesse de rotation selon au moins l'une des revendications 1 à 4, **caractérisé en ce que** le détecteur de vitesse de rotation est configuré de telle sorte que le premier axe de sensibilité (y) se trouve dans le plan x-y, c'est-à-dire dans la surface de base du substrat, notamment **en ce que** le premier axe de sensibilité est configuré parallèlement à l'axe x ou à l'axe y, et **en ce que** le deuxième axe de sensibilité (z) est configuré parallèlement à l'axe z, c'est-à-dire perpendiculairement à la surface de base du substrat.

6. Détecteur de vitesse de rotation selon au moins l'une des revendications 1 à 5, **caractérisé en ce que** toutes les masses sismiques (1, 10) du détecteur de vitesse de rotation sont configurées, suspendues (3, 5, 6, 7, 9, 11) et couplées (4, 12) de telle sorte qu'elles sont suspendues exclusivement en mobilité pour leurs excursions respectives dans le cadre du mode d'entraînement, pour leurs excursions respectives dans le cadre du premier mode de lecture, ceci ne concernant que les masses sismiques (1) qui, lors de la détection d'une vitesse de rotation, oscillent autour du premier axe de sensibilité (y) dans le premier mode de lecture, et pour leurs excursions respectives dans le cadre du deuxième mode de lecture, ceci ne concernant que les masses sismiques (10) qui, lors de la détection d'une vitesse de rotation, oscillent autour du deuxième axe de sensibilité (z) dans le deuxième mode de lecture, et **en ce que** ces excursions s'effectuent en opposition de phase pour les masses sismiques (1, 10) qui oscillent dans le mode correspondant, les masses sismiques (1, 10) étant suspendues de manière rigide pour ce qui concerne toutes les autres excursions.

7. Détecteur de vitesse de rotation selon la revendication 1, **caractérisé en ce que** la première et la deuxième masse sismique (1) sont suspendues (3, 4) et sont entraînées (23) de telle sorte que dans un mode d'entraînement en rotation, elles oscillent en opposition de phase autour de l'axe z.

8. Détecteur de vitesse de rotation selon au moins l'une des revendications 1 à 7, **caractérisé en ce que** le détecteur de vitesse de rotation possède des masses sismiques supplémentaires (10), notamment quatre masses sismiques supplémentaires (10), qui, dans une position de repos, sont disposées et suspendues de manière symétrique par rapport au centre de gravité de l'ensemble du détecteur de vitesse de rotation.

9. Détecteur de vitesse de rotation selon la revendication 8, **caractérisé en ce que** la première et la deuxième masse sismique (1) sont suspendues et/ou couplées de telle sorte qu'elles peuvent exclusivement exécuter des excursions rotatoires en opposition de phase autour de l'axe z et autour de l'axe x, et **en ce que** les masses sismiques supplémentaires (10) sont suspendues et/ou couplées de telle sorte qu'elles peuvent exclusivement exécuter des excursions linéaires dans la direction de l'axe x et dans la direction de l'axe y.

10. Détecteur de vitesse de rotation selon la revendication 8 ou 9, **caractérisé en ce que** chacune des masses sismiques supplémentaires (10) est au moins partiellement suspendue (9) à un cadre (6) qui lui est respectivement associé, notamment respectivement dans la zone intérieure du cadre, lequel est respectivement couplé (5) à la première ou à la deuxième masse sismique (1), ce qui permet notamment de transmettre l'énergie motrice pour le mode d'entraînement de la première et de la deuxième masse sismique (1) par le biais des éléments ressorts (5) de couplage respectifs aux cadres (6) et aux masses sismiques supplémentaires (10) qui y sont au moins partiellement suspendues.

11. Détecteur de vitesse de rotation selon la revendication 10, **caractérisé en ce que** les cadres (6) sont suspendus de telle sorte qu'ils peuvent exclusivement exécuter des excursions linéaires dans la direction de l'axe x.

12. Détecteur de vitesse de rotation selon au moins l'une des revendications 8 à 11, **caractérisé en ce qu'**une paire de masses sismiques supplémentaires (10) est à chaque fois couplée au moyen d'un fléau de couplage (12) de telle sorte qu'elles ne peuvent exécuter que des excursions en opposition de phase pour ce qui concerne le deuxième mode de lecture.

13. Détecteur de vitesse de rotation selon au moins l'une des revendications 1 à 12, **caractérisé en ce que** l'excursion des messages sismiques (1, 10) qui oscillent dans l'un des modes de lecture est détectée de manière double et différentielle, deux excursions opposées étant respectivement détectées pour la phase et pour la phase opposée pour ce qui concerne l'excursion en opposition de phase, ce qui veut dire qu'un total d'au moins quatre dispositifs de lecture (15, 16, 17, 18, 19, 20, 21, 22) est associé aux masses sismiques (1, 10) qui oscillent dans l'un des modes de lecture.

14. Utilisation d'un détecteur de vitesse de rotation selon au moins l'une des revendications 1 à 13 dans des véhicules automobiles, notamment pour détecter le taux de lacet, c'est-à-dire une rotation autour de l'axe de hauteur du véhicule, et pour détecter un taux de roulis ou un taux de tangage du véhicule.
